(19) Europäisches Patentamt

European Patent Office

Office européen des brevets

(11) **EP 1 695 115 B1**

(12) **FASCICULE DE BREVET EUROPEEN**

(45) Date de publication et mention
de la délivrance du brevet:
**01.04.2009 Bulletin 2009/14**

(21) Numéro de dépôt: **04798166.7**

(22) Date de dépôt: **05.11.2004**

(51) Int Cl.:
***G01S 15/93*** *(2006.01)*

(86) Numéro de dépôt international:
**PCT/EP2004/052819**

(87) Numéro de publication internationale:
**WO 2005/069038 (28.07.2005 Gazette 2005/30)**

(54) **DISPOSITIF D' EVITEMENT D'OBSTACLES POUR NAVIRES MULTICOQUES RAPIDES**

EINRICHTUNG ZUR VERMEIDUNG VON HINDERNISSEN FÜR EIN SCHNELLES WASSERFAHRZEUG MIT MEHREREN HÜLLEN

DEVICE FOR AVOIDING OBSTACLES FOR HIGH-SPEED MULTI-HULLED WATERCRAFT

(84) Etats contractants désignés:
**AT BE BG CH CY CZ DE DK EE ES FI FR GB GR HU IE IS IT LI LU MC NL PL PT RO SE SI SK TR**

(30) Priorité: **19.12.2003  FR 0315028**

(43) Date de publication de la demande:
**30.08.2006  Bulletin 2006/35**

(73) Titulaire: **Thales**
**92200 Neuilly Sur Seine (FR)**

(72) Inventeur: **CAROF, Alain**
**THALES Intellectual Property**
**F-94117 ARCUEIL (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A1- 2003 222 778**

• **CAROF A H: "Acoustic differential delay and Doppler tracking system for long range AUV positioning and guidance" OCEANS '94. 'OCEANS ENGINEERING FOR TODAY'S TECHNOLOGY AND TOMORROW'S PRESERVATION.' PROCEEDINGS BREST, FRANCE 13-16 SEPT. 1994, NEW YORK, NY, USA, IEEE, 13 septembre 1994 (1994-09-13), pages III-389, XP010125131 ISBN: 0-7803-2056-5**
• **CHESTNUT P C: "EMITTER LOCATION ACCURACY USING TDOA AND DIFFERENTIAL DOPPLER" IEEE TRANSACTIONS ON AEROSPACE AND ELECTRONIC SYSTEMS, IEEE INC. NEW YORK, US, vol. AES-18, no. 2, mars 1982 (1982-03), pages 214-218, XP001007484 ISSN: 0018-9251**

EP 1 695 115 B1

## Description

La présente invention a pour objet un dispositif d'évitement d'obstacles, en particuliers d'obstacles immergés à faible profondeur, destiné en particulier aux navires multicoques et notamment aux navires multicoques rapides. En effectuant une détection précoce des échos provenant d'objets situés sur la route du navire, le dispositif permet en particulier à l'équipage du navire de prendre des dispositions pour infléchir le cap afin d'éviter ces objets.

L'augmentation croissante de la vitesse des navires et de la fréquentation de certaines routes maritimes rend de plus en plus évident le problème posé par la dérive sur la mer d'objets flottants qui peuvent se trouver sur la route des navires. Pour être d'une certaine efficacité, la détection de ces objets et leur localisation doivent être suffisamment précoces pour permettre éventuellement à l'équipage du navire d'infléchir le cap de façon à éviter ces objets. Dans la mesure où le navire est en mouvement, le paramètre important est ici la position relative de l'objet détecté par rapport au navire. Il peut également être utile de savoir de façon relativement précise si l'objet détecté flotte en surface ou bien s'il est immergé, sa profondeur d'immersion.

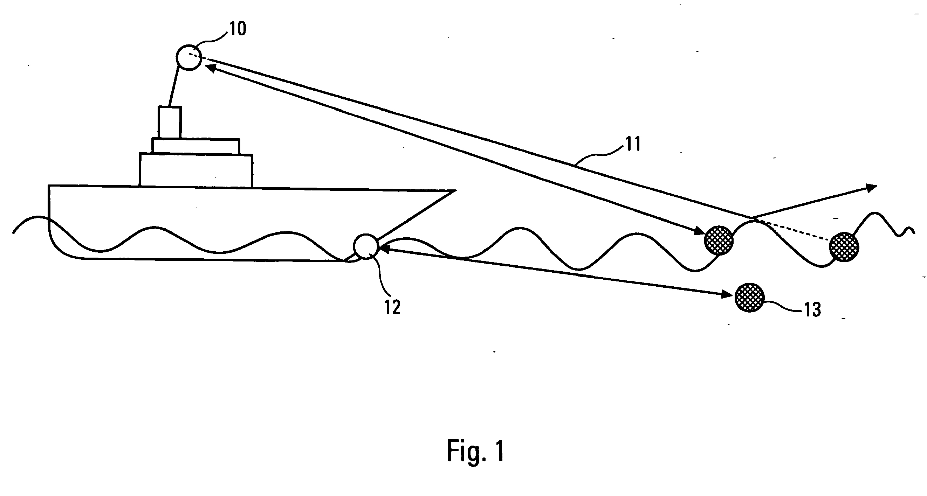

Pour effectuer la détection d'objets flottants il existe plusieurs types de dispositifs utilisant principalement des senseurs électromagnétiques tels que des radars, des capteurs optiques utilisant les longueurs d'ondes visibles ou infra rouges ou encore des capteurs laser. Ces dispositifs sont efficaces pour détecter des objets flottants ou très faiblement immergés, en particulier lorsque la mer est faiblement agitée. En revanche, si l'objet flottant est d'une taille relativement faible, et si la mer est forte l'efficacité des senseurs électromagnétiques diminue très sensiblement. De même leur efficacité diminue rapidement si la profondeur d'immersion de l'objet augmente, comme sur l'illustration de la figure 1. L'efficacité des senseurs électromagnétiques 10 est par ailleurs affectée par l'incidence de la direction d'émission par rapport à la surface de l'eau. En effet, lorsque l'on cherche augmenter la portée de détection pour l'adapter aux besoins de navires rapides, l'onde électromagnétique 11 est souvent émise de manière rasante avec un angle d'incidence faible par rapport à la surface de la mer, l'angle d'incidence devenant alors proche de l'angle limite correspondant à la réflexion totale sur la surface de la mer de l'onde émise. Dans une mer agitée, les performances de ces dispositifs se trouvent en outre altérées par les vagues.

Pour pallier les problèmes liés aux senseurs électromagnétiques, il est connu d'utiliser des senseurs acoustiques 12, tels que des sonars actifs, qui permettent de détecter les obstacles, y compris les objets immergés 13. Cependant, l'exploitation des propriétés des ondes acoustiques telle qu'elle est réalisée dans les dispositifs connus de l'art antérieur, est peu adaptée aux navires à grande vitesse. En effet ces navires présentent des caractéristiques de structure particulières comme notamment l'existence d'une coque faite de plusieurs flotteurs présentant une grande finesse.

D'autre part, les moyens de détection de ces navires à grande vitesse subissent l'influence non négligeable de l'effet doppler engendré par leur propre vitesse.

Pour les navires à grande vitesse, la détection et la localisation d'objets doit alors faire intervenir plusieurs paramètres tels que la fréquence d'émission des ondes acoustiques, la forme des ondes émises, les dimensions de l'antenne, et l'effet doppler consécutif à la vitesse du navire. Ces différents paramètres ne sont pas systématiquement utilisés par les dispositifs existants.

Il est connu que pour une antenne linéaire par exemple, la résolution angulaire de la mesure effectuée est donnée par une formule du type :

$$\theta_3 = k.\lambda/L \qquad\qquad [1]$$

où:

- $\theta_3$ est l'ouverture du lobe principal de l'antenne à -3dB,
- $\lambda$ est la longueur d'onde de l'onde acoustique donnée par $\lambda = c/f$, où c représente la vitesse de propagation de l'onde dans le milieu considéré (eau de mer ou eau douce par exemple) et f la fréquence de l'onde acoustique,
- L est la longueur de l'antenne,
- K est un coefficient notamment lié à la forme de l'antenne et à la fonction de pondération des lobes utilisée. k peut notamment prendre une valeur comprise entre 0.9 et 1.5.

La relation [1] permet de constater que $\theta_3$ est fonction de la fréquence de l'onde émise, ainsi que la longueur de l'antenne. Pour un navire à grande vitesse, il est souhaitable disposer à la fois d'une portée assez longue, et d'une précision angulaire suffisante de façon à pouvoir déterminer de manière précoce et précise la position des objets présents sur la route du navire.

Satisfaire l'exigence de précision incite à choisir, conformément à la relation [1], une fréquence d'émission relativement élevée associée à une antenne de grande taille. Cependant, on sait que le coefficient d'absorption des ondes acoustiques est fonction de la fréquence de l'onde émise ou plus précisément de l'inverse du carré de la fréquence. Autrement dit, plus la fréquence d'émission est élevée et plus la portée est limitée, la puissance émise étant par ailleurs constante. L'exigence de portée conduit donc à un choix d'émission à fréquence relativement basse. La dualité de ces deux exigences aboutit finalement à la recherche d'un compromis.

Dans le cas particulier d'un navire multicoque, le compromis s'avère plus difficile à trouver que pour un navire classique. Les contraintes hydrodynamiques de telles embarcations obligent en particulier à diminuer tout ce qui peut affecter la traînée des coques et en particulier la taille des antennes. La finesse des flotteurs ne permet en outre pas de disposer d'une antenne de taille satisfaisante pour assurer la directivité voulue. On peut néanmoins pallier ce handicap en utilisant un système d'antennes de faibles dimensions comportant par exemple, à l'émission ou à la réception, deux ou plusieurs antennes. Chaque antenne peut être placée sur une coque distincte. On réalise ainsi une antenne en réseau. Il faut cependant dans ce cas prendre en compte l'apparition, outre le lobe principal, de lobes images parasites. Ces lobes parasites encore appelés lobes de réseaux sont induits par la distance qui sépare les flotteurs sur lesquels sont disposées les antennes. Cet espacement, très grand devant la longueur d'onde du signal acoustique, conduit à un sous-échantillonnage spatial du signal reçu qui induit l'apparition des lobes de réseaux. Les résultat est l'existence d'une ambiguïté sur la direction d'arrivée du signal rétro diffusé par un objet flottant.

La détection d'objets flottants par des navires à grande vitesse est en outre affectée par l'effet doppler qui intervient de façon non négligeable dans la propagation des signaux et la réception des échos. L'effet doppler doit être pris en compte si l'on souhaite procéder à une détermination correcte de la position d'objets flottants.

Pour un navire portant un émetteur et un récepteur, l'émetteur émettant une onde se réfléchissant sur un objet flottant, soumis à un simple mouvement de dérive due aux courants ou à un vent relativement faible, l'effet doppler est simplement lié surtout dû au déplacement du navire. Dans ce cas, on peut en première approximation écrire :

$$f_{reçue} \# f_{émise}(1+(2/c).v_{navire}.\cos g) \qquad [2]$$

où g représente le gisement dans lequel se trouve l'objet par rapport au cap du navire. Le gisement est déterminé par rapport à la direction du vecteur vitesse du navire qui est pris comme référence. C'est également l'angle relatif à l'axe de l'antenne.

Dans l'expression [2], le doppler est représenté par l'expression $(2/c).v_{navire}.\cos g$. Cette quantité caractérise le glissement en fréquence observé à la réception par rapport à la fréquence émise, glissement dû à l'effet doppler. Le coefficient 2 résulte du fait que l'onde émise par le sonar situé sur le navire et réfléchie par l'objet immergé subit l'effet doppler sur le trajet aller - retour.

Pour un navire comportant un émetteur et un récepteur placés au même endroit sur le navire, l'effet du mouvement du navire se traduit par une différence de durée entre le trajet effectués par l'onde acoustique émise entre l'émetteur et l'objet flottant, et le trajet effectué par l'onde acoustique réfléchie entre l'objet flottant et le récepteur. Cette différence de durée est principalement due au déplacement du navire pendant la propagation de l'onde. Si le navire s'est rapproché Le trajet retour s'avère plus court. Au contraire, si le navire s'est éloigné ce trajet s'avère plus long. L'effet doppler se traduit sur le signal, selon les cas, par une compression ou une dilatation du temps, dans le rapport v/c identique à l'aller et au retour de l'onde. En sonar actif l'estimation du doppler est généralement réalisée en effectuant l'inter-corrélation du signal reçu avec des modèles du signal émis affectés d'un effet doppler. Cette estimation peut encore être réalisée par une analyse interspectrale, en considérant que pour certains signaux, comme il a été signalé plus haut, la mesure d'un glissement en fréquence peut suffire. On peut aussi mesurer la compression du temps entre deux impulsions reçues par rapport à l'intervalle entre les deux émissions correspondantes.

La détection d'objets et la détermination précise de leurs positions sont souvent compliquées par la réverbération provenant de diffuseurs répartis dans l'espace et qui va affecte le rapport signal utile sur réverbération. Cette réverbération est d'autant plus gênante que le navire va vite et que le sous échantillonnage spatial est plus grand ce qui provoque des lobes parasites.

La demande de brevet américain publiée sous le numéro 2003/022778 le 4/12/2003, et déposée par Gregory Hubert Piesinger, décrit en outre un dispositif acoustique comportant plusieurs sonars fixes dont les diagrammes se superposent partiellement et <u>utilisant uniquement la mesure du temps de parcours</u> des ondes réfléchies par un objet évoluant dans la zone de recouvrement des diagrammes pour déterminer la position cet objet.

Le document technique de A. Carof intitulé " Acoustic Differential Delay & Doppler Tracking System for Long Range AUV Positioning and Guidance" dans la publication "OCEANS '94. 'OCEANS ENGINEERING FOR TODAY'S TECHNOLOGY AND TOMORROW'S PRESERVATION.' PROCEEDINGS BREST, FRF,NCE 13-1 6 SEPT. 1994, NEW YORK, NY, USA,IEEE", et publié le 13 septembre 1994 sous la référence ISBN : 0-7803-2056-5, décrit quant à lui une méthode pour réaliser la détermination de la trajectoire d'un véhicule sous-marin automatique en mouvement, de type AUV, équipé d'un récepteur sonar. Le procédé décrit consiste à utiliser les émissions de seulement deux émetteurs acoustiques distants l'un de l'autre et à mesurer les différences de temps de parcours et de fréquence doppler des ondes émises par les deux sources reçus par le récepteur acoustique situé dans le véhicule en mouvement.

Un but de l'invention présentée dans ce document est notamment de pallier les difficultés rencontrées lors de la détermination de la position d'objets par rapport à un navire rapide. Un autre but consiste à s'affranchir de l'ambiguïté due aux lobes parasites et à la réverbération. A cet effet celle-ci a pour objet un dispositif acoustique de détection d'objets flottants ou immergés, destiné en particulier aux navires multicoques rapides et permettant l'évitement de ces objets. La structure de ce dispositif comporte au moins :

- deux émetteurs de signaux acoustiques espacés l'un de l'autre, par exemple disposés sur des coques différentes,
- un récepteur acoustique disposé sur une des coques, dont la bande de réception est adaptée aux ondes émises par les émetteurs,
- des moyens de traitement des signaux reçus permettant de déterminer la position d'au moins un objet flottant ou immergé à partir des échos renvoyés par cet objet. Ces moyens exploitent les différences de doppler existant entre les signaux réfléchis correspondant à un même écho et consécutifs à l'émission de chacun des émetteurs.

Dans la forme de réalisation préférée les fréquences acoustiques ou les formes d'ondes émises sont distinctes,

Dans la forme de réalisation préférée, lorsque le navire est encore loin et que le doppler différentiel n'est pas significatif à la précision des mesures, la position elle peut être d'abord déterminée de manière grossière à partir de la simple mesure de l'écart de temps T séparant les instants d'arrivée sur le récepteur des ondes émise par chacun des émetteurs et réfléchie par l'objet.

Le traitement effectué présente ainsi l'avantage de permettre une première détermination, grossière mais précoce, de la position de l'objet ayant renvoyé un écho. Ce traitement préliminaire permet également avantageusement de simplifier le traitement par analyse de l'écart de fréquence doppler.

Du fait de la réciprocité de la propagation, le dispositif selon l'invention présente l'avantage de pouvoir être réalisé de façon duale en adoptant par exemple une structure comportant un seul émetteur et deux récepteurs. Dans une réalisation préférée, pour cette configuration on choisit aussi d'émettre deux signaux différents.

D'autres caractéristiques et avantages pourront apparaître au travers de la description et des figures 2 à 6, qui représentent :

La figure 2, une représentation schématique du dispositif selon l'invention implanté à l'avant d'un navire à deux coques ;

La figure 3, un schéma illustrant le principe de fonctionnement du dispositif selon l'invention.

La figure 4, un schéma illustrant les étapes d'un exemple de procédé pouvant être mis en oeuvre par le dispositif selon l'invention afin de déterminer de la position d'un objet.

La figure 5, une illustration d'un exemple particulier d'utilisation du dispositif selon l'invention.

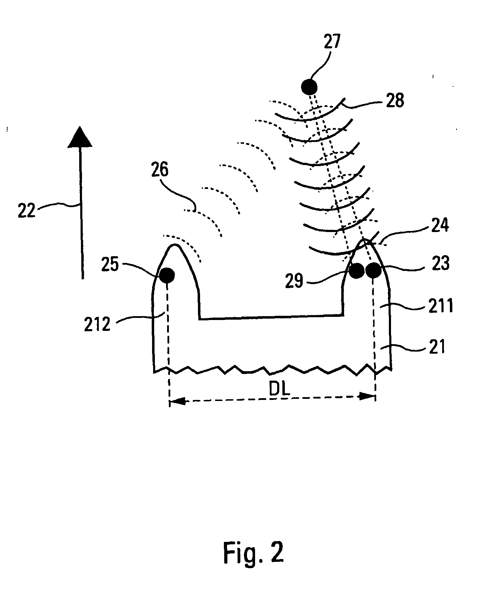

La figure 2 présente de manière schématique une forme d'implantation possible d'un mode de réalisation préféré du dispositif selon l'invention.

Dans l'exemple illustré par la figure 2, le dispositif équipe un navire à deux coques 21. La figure ne présente du navire que la partie avant et en particulier la partie avant des deux coques. La flèche 22 matérialise la progression du navire qui se dirige vers l'objet 27. Cet objet est par exemple un objet immergé à faible profondeur et qui échappe ainsi à une détection radar.

à l'avant de l'une des coques 211 se trouve positionné un émetteur sonar 23 émettant une onde acoustique 24. De même, à l'avant de l'autre coque 212 se trouve positionné un deuxième émetteur sonar 25 émettant une onde acoustique 26.

Du fait du positionnement des émetteurs sur des coques différentes, les sources d'émission se trouvent espacées d'une distance A dont la valeur est sensiblement supérieure à la longueur d'onde émise par chacun des émetteurs. Or il est connu que le fonctionnement d'un tel ensemble, est similaire à celui d'un émetteur dont le diagramme de rayonnement comporte un lobe utile orienté dans la direction d'émission et des lobes parasites présentant une périodicité spatiale. Cette périodicité est fonction du rapport de la distance séparant les deux émetteurs à la longueur d'onde émise. La détection d'un objet se trouve alors entachée d'une ambiguïté sur la position de cet objet.

Pour éviter les problèmes liés à la présence de lobes parasites, le dispositif selon l'invention, dans la forme de réalisation préférée, comporte des émetteurs 23 et 25 émettant sur des ondes acoustiques de formes ou de fréquences différentes. Les signaux provenant de chacun des émetteurs sont ainsi facilement différentiés à la réception.

Sur l'une des deux coques, la coque 211 par exemple, se trouve également positionné un récepteur sonar 29 dont la bande de réception couvre celles occupées par les ondes 24 et 26.

Le principe de fonctionnement de l'ensemble constitué par les émetteurs et le récepteur peut être décrit de manière simple comme suit.

Chaque fois qu'un objet se trouve dans la zone couverte par les deux émetteurs sonar, il renvoie un écho qui est capté par le récepteur. Cet écho est matérialisé par une onde réfléchie 28 qui résulte de la réflexion des ondes incidentes 24 et 26 sur l'objet. Après réception, les signaux réfléchis issus de l'onde incidente 24 et ceux issu de l'onde incidente 26, sont traités de façon à déterminer précisément et rapidement la position par rapport au navire de l'objet ayant renvoyé un écho.

La figure 2 illustre le cas particulier où le dispositif selon l'invention est utilisé sur un navire comportant deux coques. Il est bien entendu possible d'extrapoler cet exemple à un navire comportant par exemple trois coques. Dans ce cas le récepteur peut être porté par une des coques portant déjà un émetteur ou encore par la coque ne portant pas d'émetteur. Le principe de fonctionnement général demeure inchangé.

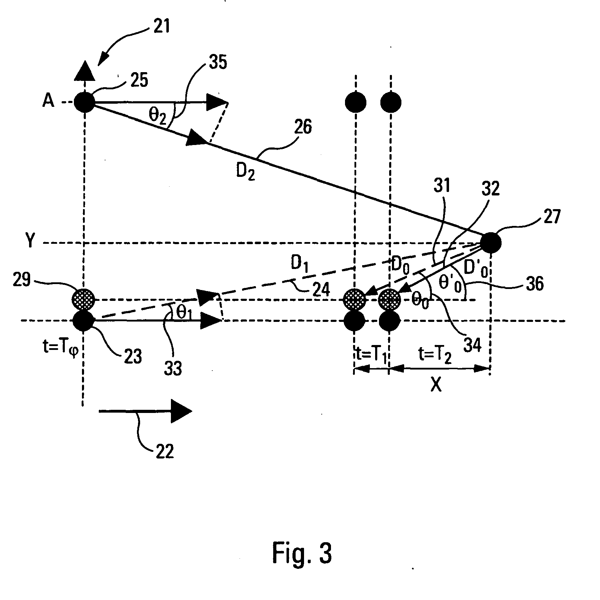

La figure 3 permet d'illustrer les principes de fonctionnement du dispositif selon l'invention.

Selon l'invention, la détermination de la position d'un objet flottant ou faiblement immergé et se trouvant sur la route suivie par le navire, peut être réalisé en deux temps. Dans un premier temps, lorsque l'objet est encore suffisamment loin du navire, la position de l'objet fait l'objet d'une détermination grossière réalisée par analyse de la différence entre les temps d'arrivée respectifs des ondes reçues par réflexion sur l'objet des ondes émises par chacun des émetteurs. Puis dans un deuxième temps la position de l'objet est déterminée de façon plus précise en analysant la différence des dopplers affectant les ondes reçues.

Ces deux façons de déterminer la position de l'objet son exposées dans la suite du document.

Sur la figure 3, le navire 21 est représenté symboliquement par les trois disques 23, 25 et 29, à différents instants $T_0$, $T_1$ et $T_2$ de sa progression selon une direction 22. La figure 3 présente également un objet 27 situé sur la route du navire.

Soient $D_1$ et $D_2$, les distances radiales séparant respectivement à l'instant $T_0$ l'objet des émetteurs 23 et 25 qui équipent le navire. De façon à clarifier l'exposé le milieu de propagation est supposé isotrope et isocélère. Si on appelle C la vitesse de propagation des ondes sonores dans le milieu considéré. Compte tenu du déplacement du navire on peut écrire :

$$T_1 = T_0 + D_1/C + D_0/C \qquad [3]$$

et

$$T_2 = T_0 + D_2/C + D'_0/C \qquad [4]$$

où $T_1$ et $T_2$ représentent les instants d'arrivée au niveau du récepteur des échos 31 et 32 réfléchis par l'objet 27. Ces échos sont consécutifs de l'émission synchrone à l'instant T0 des ondes 24 et 26 par les deux émetteurs 23 et 25. $D_0$ et $D'_0$ représentent quant à elles les distances radiales séparant l'objet du navire aux instants $T_1$ et $T_2$. Les angles 33 et 35 représentent les angles que font les directions des ondes émises par les émetteurs, avec l'axe de déplacement du navire pris par exemple comme référence. De même, les angles 34 et 36 représentent les angles que font les directions des ondes reçues par le récepteur avec le même axe de référence.

Les distances D1 et D2 qui séparent à l'instant $T_0$ l'objet renvoyant un écho de chaque émetteur, sont distinctes. Elles sont fonction des positions relatives de l'objet et du navire à $T_0$. Deux ondes émises simultanément à $T_0$ par chacun des émetteurs n'atteignent donc pas l'objet au même instant et sont reçues par le récepteur, après réflexion sur l'objet, à des instants différents.

D'autre part, du fait de la vitesse de déplacement du navire, la positions relative de l'objet par rapport au récepteur varie entre les instants $T_1$ et $T_2$ de réception des ondes réfléchies par l'objet. Les trajets $D_0$ et $D'_0$ parcourus par les ondes réfléchies sont donc également différents.

La différence $(T_2 - T_1)$ est donc fonction à la fois fonction de la position de l'objet par rapport au navire et de la vitesse de déplacement du navire.

Si l'on considère par ailleurs que la distance entre le navire et l'objet ne varie pas sensiblement pendant la mesure, les trajets $D_0$ et $D'_0$ peuvent être confondus. La connaissance des valeurs $T_1$ et $T_2$, ou encore de la valeur de l'écart $(T_2 - T_1)$, est alors suffisante pour déterminer par des moyens connus, non décrits dans ce document, la position de l'objet par rapport au navire. En revanche, dans le cas d'un navire à grande vitesse les trajets $D_0$ et $D'_0$ ne peuvent être en toute rigueur confondus. Même, si la distance séparant l'objet 27 du navire 21 est grande, par exemple supérieure à 1 km, le déplacement du navire pendant le trajet des ondes sonores dans l'eau ne peut être négligé et on peut écrire :

$$D_1 > D_0 \quad \text{et} \quad D_2 > D'_0 \qquad [5]$$

L'écart $(T_2 - T_1)$ dépend alors dans une large mesure de l'écart $(D_2 - D_1)$ et dans une mesure moindre de l'écart $(D_0 - D'_0)$. Ainsi, si on pose $T_0 = 0$, on peut écrire :

$$D_1^2 = (X + V.T_1)^2 + Y^2 \qquad [6]$$

$$D_2^2 = (X + V.T_2 - V(T_2 - T_1))^2 + (A - Y)^2 \qquad [7]$$

$$D_0^2 = X^2 + Y^2 \qquad [8]$$

$$D'_0{}^2 = (X - V.(T_2 - T_1))^2 + Y^2 \qquad [9]$$

Si l'on considère que l'objet est situé à une grande distance du navire, on peut considérer que $T_2 - T_1 \# (D_2 - D_1) / C$, V restant faible au regard de C même pour des navires à grande vitesse, progressant par exemple à une vitesse de 50noeuds. On peut alors simplifier les relations précédentes comme suit:

$$D_1^2 \# (X + V.T_1)^2 + Y^2 \qquad [10]$$

$$D_2^2 \# (X + V.T_2)^2 + (A - Y)^2 \qquad [11]$$

$$D_0^2 = X^2 + Y^2 \# D'_0{}^2 \qquad [12]$$

Les mesures des valeurs $T_1$ et $T_2$ ou de la différence $(T_2 - T_1)$ suffisent alors pour déterminer de manière satisfaisante Les coordonnées X et Y de l'objet.

De manière graphique ces coordonnées X et Y déterminent l'intersection de deux ellipses. L'une des ellipses correspond à la localisation par rapport au récepteur des points pour lesquels le temps de propagation d'une onde émise par l'émetteur 1 correspond à $T_1$. L'autre ellipse correspond à la localisation par rapport au récepteur des points pour lesquels le temps de propagation d'une onde émise par l'émetteur 2 correspond à $T_2$

Pour rendre plus aisée la mesure des valeurs $T_1$ et $T_2$, le dispositif selon l'invention utilise avantageusement, dans la forme de réalisation préférée, deux émissions acoustiques distinctes présentant des fréquences $F_1$ et $F_2$ différentes ou encore des formes différentes. Ainsi l'instant $T_0$ de début d'émission étant identique, le récepteur peut aisément, par exemple par filtrage, séparer les signaux reçus correspondant au même écho à l'aide de leur fréquence et déterminer les instants de réception $T_1$ et $T_2$ des signaux issus respectivement des émetteurs 23 et 25.

Ainsi, pour lorsque l'objet est situé à une distance relativement grande du navire, le principe de détermination basé sur la mesure de l'écart $(T_2 - T_1)$ permet de déterminer de façon relativement simple la position de l'objet par rapport navire. Compte tenu de la distance séparant le navire, la position de l'objet est déterminée avec une précision suffisante. En revanche, dès lors que la détection de l'objet est réalisée en champ proche ce principe de détermination basé seulement sur la mesure de la différence $(T_2 - T_1)$ s'avère trop imprécis pour permettre une navigation sûre. L'approximation consistant à identifier $D'_0$ à $D_0$ n'est plus acceptable. Cette imprécision est en outre d'autant plus pénalisante que les objets sont alors situés à une distance proche du navire. Le laps de temps disponible pour opérer une manoeuvre d'évitement est alors très court. On rappelle à ce propos que par fonctionnement en champ proche il faut entendre ici un cas de fonctionnement pour lequel la distance D entre l'objet et le navire est faible et que le rapport $A/\lambda$ est grand. A et $\lambda$ représentent respectivement la distance séparant les deux émetteurs et $\lambda$ la longueur du signal.

Dans la mesure où l'objet est plus proche du navire, l'accroissement de l'influence de l'effet doppler liée à l'importance des variations entre les angles d'émission 33, 35 et de réception 34, 36 empêche toute approximation simplificatrice permettant de déterminer la position de l'objet en utilisant simplement la mesure de $T_1$ et $T_2$ ou de la différence ($T_2$ - $T_1$). Par ailleurs, la mise en oeuvre de traitements non cohérents utilisant, par exemple la mesure de l'énergie reçue, n'est pas non plus envisageable. Ce genre de traitement conduirait à la génération de nombreuses fausses alarmes provenant notamment de la prise en compte des phénomènes de réverbération de volume ou de surface.

Pour traiter le problème engendré par la détection d'objets en champ proche, le dispositif selon l'invention met en oeuvre un traitement différent de celui exposé précédemment et qui associe l'exploitation de la mesure du retard ($T_2$ - $T_1$) à une exploitation de l'effet doppler qui affecte les signaux reçus. En effet, en fonction de la position relative de l'objet détecté par rapport à l'un et l'autre des émetteurs les signaux émis par les deux émetteurs 23, 25 et réfléchis par l'objet sont affectés de décalages de fréquence différents. Le traitement mis en oeuvre consiste donc à déterminer à partir d'une analyse fréquentielle des signaux reçus la position de l'objet en utilisant la fréquence doppler différentielle. Cette détermination peut être faite par différents moyens connus.

La détermination de la fréquence doppler différentielle permet avantageusement de connaître la variation de la position du navire entre les instants $T_1$ et $T_2$. Associée à la connaissance de V, comme le montrent les relations [6] à [9], elle permet la détermination exacte des coordonnées X et Y de l'objet. V peut être connue par ailleurs ou estimée classiquement au moyen de l'effet doppler. Le principe de la détermination de la fréquence doppler différentielle selon l'invention est décrit dans les paragraphes suivants.

Si on considère pour des raisons de clarté de l'exposé que l'objet qui renvoie un écho est immobile ou du moins animé d'une vitesse propre très faible, la relation liant la fréquence doppler différentielle à la position de l'objet ayant renvoyé un écho peut être établie de façon simple.

Les deux émetteurs étant synchronisés et émettant par exemple des signaux de fréquences respectives $F_1$ et $F_2$, les signaux captés par le récepteur et provenant de la réflexion par l'objet des signaux émis, seront reçus à des fréquences $Fr_1$ et $Fr_2$ telles que:

$$F_{r1} \# F_1[1 + V/C.(\cos\theta_1 + \cos\theta_0)] \quad [13]$$

et

$$F_{r2} \# F_2[1 + V/C.(\cos\theta_2 + \cos\theta'_0)] \quad [14]$$

Où $\theta_1$, $\theta_2$, $\theta_0$ et $\theta'_0$ correspondent respectivement aux angles incidents et réfléchis 33, 35, 34 et 36 de la figure 3. Ces angles sont fonction des coordonnées X et Y de l'objet.

Les décalages en fréquence entre signaux émis et reçus sont liés à la vitesse du navire qui fait varier la position relative du navire par rapport à l'objet.

Si l'on compense le retard différentiel (T2-T1) correspondant à l'écart de temps séparant les instants de réception des échos provenant de l'objet et si l'on effectue l'intercorrélation des signaux reçus correspondant au même instant d'émission on obtient un signal de la forme :

$$C(t) = \tfrac{1}{2} A_1.A_2.[\cos(2\pi\Delta F_r.t) + \cos(2\pi\Sigma F_r.t)] \quad [15]$$

Le signal obtenu comporte avantageusement les deux composantes fréquentielles :

$$\Delta F_r = F_{r1} - F_{r2} \quad [16]$$

et

$$\Sigma F_r = F_{r1} + F_{r2} \quad [17]$$

Il est ensuite possible, en appliquant un filtrage de type "passe-bas" et un filtrage de type passe haut, d'isoler les composantes fréquentielles $\Delta F_r$ et $\Sigma F_r$.

Si d'autre part on appelle $Vr_1$ et $Vr_2$ les projections de la vitesse du navire suivant $D_1$ et $D_2$, à partir des relations [13] et [14] on peut écrire :

$$Fr_1 = F_1 \ [ \ 1 + \frac{Vr_1}{C} + \frac{V}{C} \cos \theta_0 ) \ ] \qquad [18]$$

$$Fr_2 = F_2 \ [ \ 1 + \frac{Vr_2}{C} + \frac{V}{C} \cos \theta'_0 \ ] \qquad [19]$$

D'où l'on tire:

$$Vr_1 = C \ . \ [ \ Fr_1 - F_1 \ (1 + \frac{V}{C} \cos \theta_0 ) \ ] \ / \ F_1 \qquad [20]$$

$$Vr_2 = C \ . \ [ \ Fr_2 - F_2 \ (1 + \frac{V}{C} \cos \theta'_0 ) \ ] \ / \ F_2 \qquad [21]$$

on obtient ainsi :

$$F_1.Vr_1 - F_2.Vr_2 = C \ . ( \ \Delta Fr - \Delta F \ ) - F_1.V \cos \theta_0 + F_2.V \cos \theta'_0 \qquad [22]$$

$$F_1.Vr_1 + F_2.Vr_2 = C \ . ( \ \Sigma Fr - \Sigma F \ ) - F_1.V \cos \theta_0 - F_2.V \cos \theta'_0 \qquad [23]$$

Les relations [22] et [23] permettent ainsi, si l'on connaît les fréquences d'émission $F_1$ et $F_2$, de déterminer les valeurs de la fréquence doppler différentielle donnée par l'expression :

$$\Delta f_d = \Delta Fr - \Delta F \qquad [24]$$

avec $\Delta Fr = Fr_2 - Fr_1$ et $\Delta F = F_2 - F_1$

La fréquence doppler différentielle, Image de la vitesse V, apparaît comme étant fonction des angles $\theta_0$, $\theta'_0$, $\theta_1$ et $\theta_2$. Il est donc possible en déterminant la valeur de la fréquence doppler différentielle $\Delta f_d$, de déterminer $\theta_0$, $\theta'_0$, $\theta_1$ et $\theta_2$, et donc de déterminer les coordonnées X et Y de l'objet 27 ayant renvoyé un écho. Cette détermination peut se faire par toute méthode connue.

Dans le cas du dispositif selon l'invention, selon le mode de réalisation préféré, la mise en oeuvre de l'analyse fréquentielle du signal reçu est avantageusement facilitée par l'utilisation de deux fréquences d'émission acoustiques $F_1$ et $F_2$ différentes. A la réception, il est alors facile de séparer par filtrage le signal issu de l'émetteur 23 de celui issu de l'émetteur 25 et d'effectuer séparément l'analyse fréquentielle de chacun des signaux. Cette analyse fréquentielle permet de déterminer la fréquence doppler de chaque signal et de calculer la fréquence doppler différentielle

L'utilisation d'autres classes de signaux est possible et peut se révéler avantageuse pour certaines applications, ces signaux peuvent alors être choisis en fonction des propriétés de leur fonction d'ambiguïté qui caractérise leur aptitude à permettre une discrimination en retard et en doppler.

Il est utile de noter que l'utilisation de la fréquence doppler différentielle $\Delta f_d$ pour déterminer la position d'un l'objet se trouvant en zone proche par rapport au navire, peut également être utilisé quand l'objet est situé à une distance plus importante.

L'illustration de la figure 3 présente le dispositif selon l'invention dans une configuration comportant deux émetteurs espacés l'un de l'autre et un récepteur. Bien entendu, du fait de la réciprocité des propriétés utilisées il est possible de mettre en oeuvre le principe de détermination de la position d'un objet flottant exposé ci-dessus en utilisant un dispositif comportant un seul émetteur émettant simultanément deux ondes de fréquences différentes et deux récepteurs éloignés l'un de l'autre, chaque récepteur ayant une bande passante adaptée à une des fréquences d'émission.

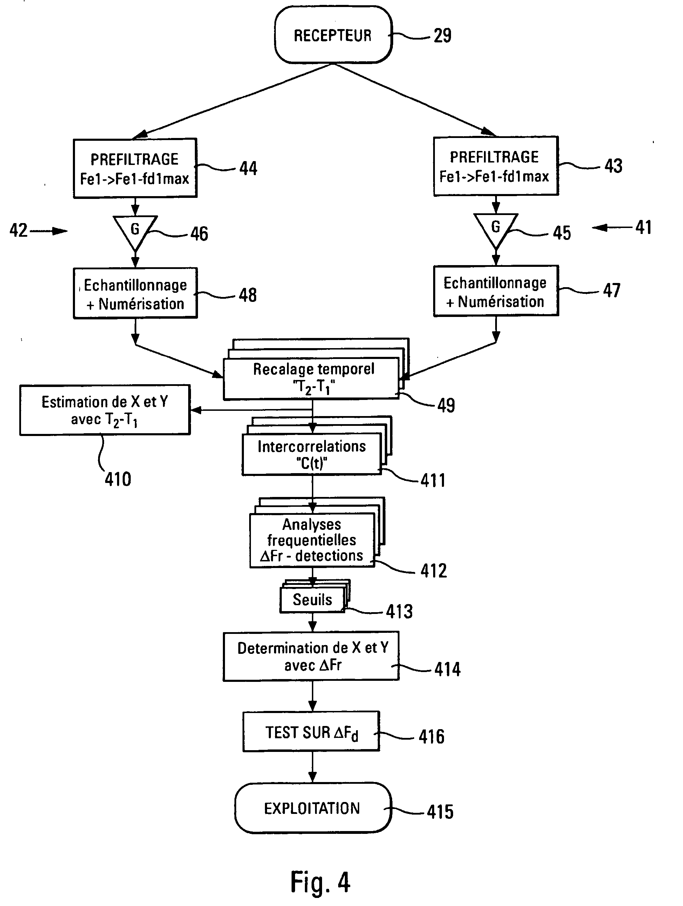

La figure 4 présente à titre d'exemple, le schéma de principe décrivant les étapes d'un procédé permettant de déterminer la position d'un objet flottant par rapport à un navire équipé du dispositif selon l'invention. Ce procédé comporte différentes étapes.

A la sortie du récepteur 29 le signal reçu est distribué sur deux voies parallèles de traitement 41 et 42. La voie de traitement 41 comporte une étape de pré filtrage 43 destinée à ne conserver que la composante du signal reçu dont le spectre est centré

sur la fréquence d'émission Fe1 du premier émetteur 23. Le signal traité par la voie 41 correspond ainsi au signal issu de l'émetteur 23 réfléchi par l'objet 27.

Parallèlement, dans la voie de traitement 42, le signal reçu subit une opération de pré filtrage 44 destinée à ne conserver que la composante du signal reçu dont le spectre est centré sur la fréquence d'émission Fe2 du deuxième émetteur 25. Le signal traité par la voie 42 correspond ainsi au signal issu de l'émetteur 25 réfléchi par l'objet 27. Le signal filtré subit ensuite une opération de correction de gain 46 ainsi qu'une opération d'échantillonnage et de numérisation 48.

Les signaux numériques ainsi obtenus font l'objet d'une opération 49 de recalage temporel suivie d'une intercorrélation 411. Le recalage temporel a pour objet de re synchroniser les signaux reçus par le récepteur, pour remettre en concordance les signaux réfléchis par l'objet détecté qui proviennent de signaux émis au même instant par les deux émetteurs 23 et 25. Ce recalage temporel est par exemple réalisé en appliquant au signal de l'une des voies de traitement 41 ou 42 un jeu de retards, chaque retard correspondant à une valeur de la différence de marche des ondes acoustiques émises par les deux émetteurs et réfléchies par l'objet. L'opération de recalage temporelle peut donner lieu à une opération 410 de détermination grossière des coordonnées X et Y de l'objet, à partir de la valeur $T_2-T_1$ déterminée. Cette première détermination ne prend pas en compte la vitesse V du navire.

L'opération 411 effectue ensuite l'intercorrélation des signaux de chacune des voies pour chacun des retards appliqués. On obtient ainsi des signaux C(t) dont la forme générale peut être exprimée par la relation [15].

Les signaux obtenus font ensuite l'objet d'opérations 412 d'analyse fréquentielle dont le but est notamment de déterminer pour chaque résultat d'intercorrélation les valeurs ΔFr pour lesquelles on détecte un signal. Le niveau de la composante spectrale issue de chaque analyse peut faire l'objet, comme mentionné sur la figure, d'une comparaison 413 à un seuil de détection. Les valeurs Δfr correspondante donne lieu à l'opération 414 de détermination de la position de l'objet détecté. Cette opération consiste par exemple à calculer les coordonnées X et Y de l'objet en prenant en compte la vitesse V du navire, V étant déterminée à partir de ΔFr suivant une méthode connue. Ces coordonnées donnent lieu à une exploitation 415. Celle-ci peut consister en un affichage sur une console un opérateur qui peut ainsi décider de la menace que représente l'objet ou en une utilisation par un dispositif de surveillance et d'évitement automatique.

Afin d'éviter l'apparition d'un grand nombre de fausses alarmes, le procédé peut en outre comporter une opération 416 consistant en un test des valeurs $ΔF_d$ calculées à partir des valeurs ΔFr conduisant au rejet des points pour lesquels $ΔF_d$ ne correspond pas à une fréquence doppler différentielle jugée plausible. Le test peut par exemple consister en une comparaison de la valeur $ΔF_d$ calculée aux valeurs stockées dans une table.

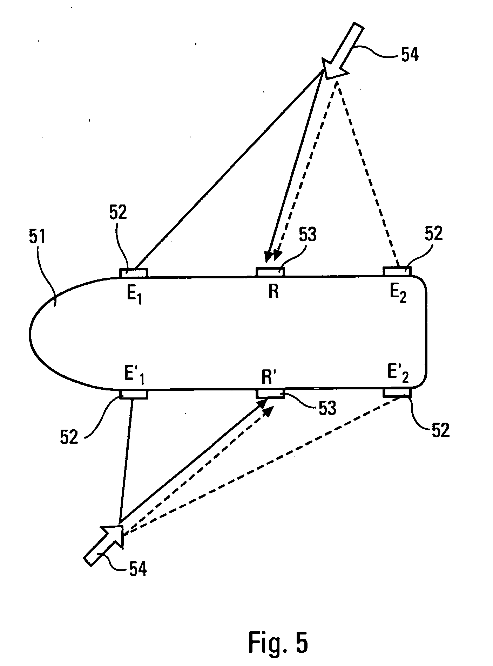

Le dispositif selon l'invention apporte donc une solution au problème posé par la détection d'objets flottants ou faiblement immergés, placés sur la route de navires et notamment de navires à grande vitesse de type catamaran. Ces objets peuvent entraver le déplacement d'un navire ou même l'endommager. Cependant, comme l'illustre la figure 5, il peut être employé par des navires plus lents, ayant une inertie importante. Dans ce contexte il permet de détecter de manière précoce le rapprochement d'objets rapides 54, de façon à pouvoir être en mesure de les éviter. Pour une telle utilisation, un dispositif selon l'invention comportant par exemple deux émetteurs 52 placés aux extrémités et un récepteur 53 placé au centre, est implanté sur chacun des bords du navire 51.

Le dispositif selon l'invention tel que décrit ici est un élément embarqué sur un navire et destiné à déterminer la position d'objet se trouvant sur sa route. Cependant, de manière analogue, il peut être implanté sur une installation fixe telle qu'un chenal d'accès à un port par exemple, de façon à contrôler le bon positionnement d'un navire en approche et désirant entrer dans ce chenal.

**Revendications**

1. Dispositif d'évitement pour navire, permettant au dit navire l'évitement d'objets flottants (13) ou faiblement immergés se trouvant sur la route du navire où dans une zone proche de cette route, ledit dispositif comportant deux émetteurs d'ondes acoustiques (23, 25) espacés l'un de l'autre et un récepteur acoustique (29) dont la bande de réception est adaptée aux fréquences d'émission des émetteurs, **caractérisé en ce qu'**il comporte en outre des moyens de traitement des signaux reçus pour réaliser, au travers des échos reçus:

- une mesure de la différence des temps de propagation des ondes émises par chacun des émetteurs,
- une mesure des fréquences doppler affectant les ondes reçues et le calcul de la fréquence doppler différentielle correspondante;

ces mesures permettant de déterminer la position d'un l'objet (13) ayant renvoyé un écho.

2. Dispositif selon la revendication 1, **caractérisé en ce que** les deux émetteurs (23, 25) émettent des ondes de fréquences distinctes ou des formes d'ondes différentes.

3. Dispositif selon l'une des revendications 1 ou 2, **caractérisé en ce que** les moyens de traitement déterminent la position d'un objet à partir du calcul de l'écart temporel $\Delta T$ et de l'écart de fréquence doppler $\Delta F_d$ existant entre les deux ondes réfléchies par ledit objet, une onde réfléchie provenant du premier émetteur, et l'autre onde réfléchie provenant du second émetteur.

4. Application du dispositif selon l'une quelconque des revendications 1 à 3, à un navire multicoque, les deux émetteurs d'ondes acoustiques (23, 25) étant disposés sur des coques différentes et le récepteur acoustique (29) étant disposé sur une quelconque des coques.

5. Application du dispositif selon l'une quelconque des revendications 1 à 3, à la détection et à l'évitement d'objet s'approchant à grande vitesse d'un navire (51), le navire étant équipé d'un dispositif selon l'invention sur chacun de ses bords.

6. Application du dispositif selon l'une quelconque des revendications 1 à 3, au contrôle de positionnement de navires à l'entrée d'un port, l'entrée du port étant équipée d'au moins un dispositif selon l'invention.

7. Dispositif acoustique d'évitement d'obstacles immergés pour navire multicoques, comportant un émetteur d'ondes acoustiques disposé sur une des coques et deux récepteurs acoustiques disposés sur des coques différentes, **caractérisé en ce qu'**il comporte en outre des moyens de traitement des signaux reçus pour réaliser, au travers des échos reçus:

- une mesure de la différence des temps de propagation des ondes émises par chacun des émetteurs,
- une mesure des fréquences doppler affectant les ondes reçues et le calcul de la fréquence doppler différentielle correspondante;

ces mesures permettant de déterminer la position d'un l'objet (13) ayant renvoyé un écho.

8. Dispositif selon la revendication 7, **caractérisé en ce que** l'émetteur émet simultanément deux ondes de fréquences différentes, chaque récepteur ayant une bande de réception adaptée à l'une des fréquences d'émission.

**Claims**

1. Avoidance device for ship, allowing said ship the avoidance of floating or slightly submerged objects (13) situated on the route of the ship or in a zone close to this route, said device comprising two transmitters of acoustic waves (23, 25) spaced apart from one another, and an acoustic receiver (29), whose reception band is suitable for the emission frequencies of the transmitters, **characterized in that** it further comprises means of processing of the received signals so as to carry out, through the echos received:

- a measurement of the difference of the propagation times of the waves emitted by each of the transmitters,
- a measurement of the Doppler frequencies affecting the waves received and the calculation of the corresponding differential Doppler frequency;

these measures making it possible to determine the position of the object (13) having returned an echo.

2. Device according to Claim 1, **characterized in that** the two transmitters (23, 25) emit waves of distinct frequencies or of different waveforms.

3. Device according to one of Claims 1 or 2, **characterized in that** the processing means determine the position of an object on the basis of the calculation of the temporal deviation ΔT and of the Doppler frequency deviation $\Delta F_d$ existing between the two waves reflected by said object, a reflected wave originating from the first transmitter, and the other reflected wave originating from the second transmitter.

4. Application of the device according to any one of Claims 1 to 3, to a multihull ship, the two transmitters of acoustic waves (23, 25) being disposed on different hulls and the acoustic receiver (29) being disposed on any one of the hulls.

5. Application of the device according to any one of Claims 1 to 3, to the detection and to the avoidance of an object approaching a ship (51) at high speed, the ship being equipped with a device according to the invention on each of its edges.

6. Application of the device according to any one of Claims 1 to 3, to the controlling for positioning ships at the entrance of a port, the entrance of the port being equipped with at least one device according to the invention.

7. Acoustic device for avoidance of submerged obstacles for multihull ship, comprising an transmitter of acoustic waves disposed on one of the hulls, and two acoustic receivers disposed on different hulls, **characterized in that** it further comprises means of processing of the received signals so as to carry out, through the echos received,

  - a measurement of the difference of the propagation times of the waves emitted by each of the transmitters,
  - a measurement of the Doppler frequencies affecting the waves received and the calculation of the corresponding differential Doppler frequency;

these measures making it possible to determine the position of the object (13) having returned an echo.

8. The device according to Claim 7, **characterized in that** the transmitter simultaneously emits two waves of different frequencies, each receiver having a reception band suitable for one of the emission frequencies.

**Patentansprüche**

1. Ausweichvorrichtung für ein Schiff, die es dem Schiff ermöglicht, schwimmenden oder geringfügig unter Wasser befindlichen Objekten (13) auszuweichen, die sich auf der Route des Schiffs oder in einer Zone nahe dieser Route befinden, wobei die Vorrichtung zwei voneinander entfernte Schallwellensender (23, 25) und einen Schallempfänger (29) aufweist, dessen Empfangsband an die Sendefrequenzen der Sender angepasst ist, **dadurch gekennzeichnet, dass** sie außerdem Mittel zur Verarbeitung der empfangenen Signale aufweist, um über die empfangenen Echos durchzuführen:

  - eine Messung der Differenz der Ausbreitungszeiten der von jedem der Sender gesendeten Wellen,
  - eine Messung der Dopplerfrequenzen, die sich auf die empfangenen Wellen auswirken, und die Berechnung der entsprechenden differentiellen Dopplerfrequenz;

wobei diese Messungen es ermöglichen, die Position eines Objekts (13) zu bestimmen, das ein Echo zurückgeschickt hat.

2. Vorrichtung nach Anspruch 1, **dadurch gekennzeichnet, dass** die zwei Sender (23, 25) Wellen mit unterschiedlichen Frequenzen oder unterschiedliche Wellenformen senden.

3. Vorrichtung nach einem der Ansprüche 1 oder 2, **dadurch gekennzeichnet, dass** die Verarbeitungsmittel die Position eines Objekts ausgehend von der Berechnung der zeitlichen Abweichung ΔT und der Dopplerfrequenzabweichung $\Delta F_d$ bestimmen, die zwischen den zwei vom Objekt reflektierten Wellen existieren, eine reflektierte Welle vom ersten Sender und die andere reflektierte Welle vom zweiten Sender kommt.

4. Anwendung der Vorrichtung nach einem der Ansprüche 1 bis 3 auf ein Mehrkörperschiff, wobei die zwei Schallwellensender (23, 25) auf unterschiedlichen Körpern angeordnet sind und der Schallempfänger (29) auf einem beliebigen der Körper angeordnet ist.

5. Anwendung der Vorrichtung nach einem der Ansprüche 1 bis 3 auf die Erfassung und das Ausweichen eines Objekts, das sich einem Schiff (51) mit großer Geschwindigkeit nähert, wobei das Schiff auf jeder seiner Seiten mit einer erfindungsgemäßen Vorrichtung ausgestattet ist.

6. Anwendung der Vorrichtung nach einem der Ansprüche 1 bis 3 auf die Positionierungsüberwachung von Schiffen am Eingang eines Hafens, wobei der Hafeneingang mit mindestens einer erfindungsgemäßen Vorrichtung ausgestattet ist.

7. Vorrichtung zum Ausweichen von Unterwasserhindernissen für ein Mehrkörperschiff, die einen Schallwellensender, der auf einem der Körper angeordnet ist, und zwei Schallempfänger aufweist, die auf verschiedenen Körpern angeordnet sind, **dadurch gekennzeichnet, dass** sie außerdem Mittel zur Verarbeitung der empfangenen Signale aufweist, um über die empfangenen Echos durchzuführen:

   - eine Messung der Differenz der Ausbreitungszeiten der von jedem der Sender gesendeten Wellen,
   - eine Messung der Dopplerfrequenzen, die sich auf die empfangenen Wellen auswirken, und die Berechnung der entsprechenden differentiellen Dopplerfrequenz;

   wobei diese Messungen es ermöglichen, die Position eines ein Objekts (13) zu bestimmen, das ein Echo zurückgeschickt hat.

8. Vorrichtung nach Anspruch 7, **dadurch gekennzeichnet, dass** der Sender gleichzeitig zwei Wellen mit unterschiedlichen Frequenzen sendet, wobei jeder Empfänger ein Empfangsband hat, das an eine der Sendefrequenzen angepasst ist.

Fig. 1

EP 1 695 115 B1

Fig. 2

Fig. 3

Fig. 4

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2003022778 A, Gregory Hubert Piesinger

**Littérature non-brevet citée dans la description**

- **A. CAROF INTITULÉ.** Acoustic Differential Delay & Doppler Tracking System for Long Range AUV Positioning and Guidance. *OCEANS '94. 'OCEANS ENGINEERING FOR TODAY'S TECHNOLOGY AND TOMORROW'S PRESERVATION.' PROCEEDINGS BREST,* 13 Septembre 1994